# EUROPÄISCHE PATENTSCHRIFT

(11) **EP 2 781 982 B1**
(45) Veröffentlichungstag und Bekanntmachung des Hinweises auf die Patenterteilung: **10.10.2018**
(21) Anmeldenummer: 14152653.3
(22) Anmeldetag: 27.01.2014
(51) Int. Cl.: B60T 7/22, B60T 7/00

(54) **Not-Stopp-Verfahren für ein vergleichsweise langsam fahrendes Fahrzeug durch einen Verkehrsteilnehmer**
Emergency stop method for a relatively slow moving vehicle by a road user
Procédé d'arrêt d'urgence d'un véhicule roulant relativement lentement par un usager de la route

(30) Priorität: 22.03.2013 DE 102013205097
(43) Veröffentlichungstag der Anmeldung: 24.09.2014
(73) Patentinhaber: Robert Bosch GmbH, 70442 Stuttgart (DE)
(72) Erfinder: Friedrich, Thomas, 71691 Freiberg A. N. (DE)

(56) Entgegenhaltungen:
- EP-A1- 1 249 380
- EP-A1- 2 135 788
- FR-A1- 2 506 476

## Beschreibung

Die Erfindung betrifft ein Verfahren zum externen Not-Stoppen eines Kraftfahrzeugs bei vergleichsweise langsamer Fahrt durch einen bezüglich des Kraftfahrzeugs externen Verkehrsteilnehmer. Ferner betrifft die Erfindung ein Computerprogrammprodukt, eine Recheneinheit oder eine Verarbeitungseinrichtung, bevorzugt ein Steuergerät oder eine Steuereinrichtung für ein Kraftfahrzeug, sowie ein Bremssystem für ein Kraftfahrzeug mit automatischer Einparkfunktion.

### Stand der Technik

In dem nach wie vor aktuellen Technikfeld, automatisiertes Einparken eines Kraftfahrzeugs sind in den letzten Jahren eine Vielzahl von Innovationen entstanden. Begonnen hat dieses Technikfeld mit innerhalb eines Kraftfahrzeugs einbaubaren Ultraschallsensoren zur Abstandsmessung beim Einparken. Darauf aufbauend wurde das semi-automatische Einparken bzw. ein sogenannter Einparkassistent entwickelt. Hierbei ist ein Fahrzeugführer nur noch für das Gasgeben und Bremsen verantwortlich. Das Lenken übernimmt eine "Intelligenz" in einer Steuereinrichtung oder einem Steuergerät des Kraftfahrzeugs.

In naher Zukunft werden Funktionen wie automatisches Einparken oder Valet-Parking auf den Markt kommen, wobei der Fahrzeugführer nicht mehr in seinem Kraftfahrzeug sitzt. Er überwacht sein selbständig einparkendes Kraftfahrzeug z. B. mit Hilfe seines Smartphones oder Fahrzeugschlüssels. Bei einer solchen Überwachung kontrolliert der Fahrzeugführer eine Längsgeschwindigkeit seines Kraftfahrzeugs, wobei eine einfache Logik verwendet werden kann, welche das Kraftfahrzeug nur z. B. mit maximal 5 km/h und nur dann einparken lässt, wenn der Fahrzeugführer auf seinem Smartphone oder Fahrzeugschlüssel zwei bestimmte Tasten gedrückt hält. Tut er dies nicht, wird das Kraftfahrzeug im Wesentlichen unverzüglich gestoppt.

Die EP 1 249 380 A1 offenbart eine Ein-/Auspark-Vorrichtung zum Parken eines Personenkraftfahrzeugs in vorwärts oder rückwärts gerichteter Geradeausfahrt, welche einem Fahrzeugführer des Personenkraftfahrzeugs ein Ausnutzen von Parkflächen ermöglicht, deren geringe Breite einen seitlichen Personenausstieg aus dem eingeparkten Personenkraftfahrzeug nicht zulässt. Hierbei ist eine rechnerunterstützte Motorsteuerung des Personenkraftfahrzeugs durch eine Parklogik erweitert, welche ferngesteuert vom ausgestiegenen Fahrzeugführer derart steuerbar ist, dass das vor einer Parklücke abgestellte Personenkraftfahrzeug bei einer blockierten Lenkung in vorwärts oder rückwärts gerichteter Geradeausfahrt in die Parklücke manövrierbar ist.

Die EP 2 135 788 A1 lehrt ein Kraftfahrzeug mit einem elektronisch schaltbaren Automatikgetriebe sowie einem Park-Lenk-Assistenzsystem zum Unterstützen eines Einparkvorgangs. Hierbei weist das Kraftfahrzeug eine Steuerungseinrichtung und einen oder mehrere ein Umfeld des Kraftfahrzeugs erfassende Sensoren auf, wobei das Kraftfahrzeug mittels des Park-Lenk-Assistenzsystems bei einer Annäherung an ein Hindernis automatisch in den Stand bremsbar ist. Während eines über das Park-Lenk-Assistenzsystem unterstützten Einparkvorgangs ist ein Signal zum Schalten des Automatikgetriebes von einer Vorwärts- in eine Rückwärtsfahrstufe bzw. umgekehrt nach einem automatischen Bremsen in den Stand über ein Fahr- oder Bremspedal, eine Spracheingabe in ein Sprachsteuerungssystem oder durch ein Betätigen eines lenkrad- oder armaturenbrett- oder schlüsselseitigen Bedienelements ausgebbar, woraufhin nach Einlegen einer Fahrstufe der automatische Einparkvorgang des Kraftfahrzeugs fortsetzbar ist.

### Aufgabenstellung

Es ist eine Aufgabe der Erfindung, ein verbessertes Verfahren zum Not-Stoppen eines Kraftfahrzeugs bei vergleichsweise langsamer Fahrt anzugeben. Ferner ist es eine Aufgabe der Erfindung, diesem entsprechend ein Computerprogrammprodukt, eine Recheneinheit oder eine Verarbeitungseinrichtung, sowie ein Bremssystem für ein Kraftfahrzeug anzugeben. Hierbei soll es möglich sein, das Kraftfahrzeug durch einen bezüglich des Kraftfahrzeugs externen Verkehrsteilnehmer, z. B. einen Fußgänger oder einen außerhalb des Kraftfahrzeugs befindlichen Fahrzeugführer, zu stoppen, ohne dass dabei fahrzeugfremde technische Ein- oder Vorrichtungen benötigt werden.

### Offenbarung der Erfindung

Die Aufgabe der-Erfindung wird durch ein Verfahren zum externen Not-Stoppen eines Kraftfahrzeugs bei vergleichsweise langsamer Fahrt durch einen bezüglich des Kraftfahrzeugs externen Verkehrsteilnehmer, mittels eines Computerprogrammprodukts, mittels einer Recheneinheit oder einer Verarbeitungseinrichtung, bevorzugt einem Steuergerät oder einer Steuereinrichtung für ein Kraftfahrzeug und mittels eines Bremssystems für ein Kraftfahrzeug mit automatischer Einparkfunktion, gemäß den unabhängigen Ansprüchen gelöst. - Vorteilhafte Weiterbildungen, zusätzliche Merkmale und/oder Vorteile der Erfindung ergeben sich aus den abhängigen Ansprüchen und der folgenden Beschreibung.

Bei dem erfindungsgemäßen Verfahren zum externen Not-Stoppen des Kraftfahrzeugs kann durch einen Sensor oder Detektor des Kraftfahrzeugs eine durch einen bezüglich des Kraftfahrzeugs externen Verkehrsteilnehmer ausgelöste Not-Stopp-Bedingung des Kraftfahrzeugs sensiert bzw. detektiert werden. In einem zeitlichen Anschluss daran wird das Kraftfahrzeug bei Vorliegen der externen Not-Stopp-Bedingung gestoppt. Liegt diese nicht vor, so erfolgt natürlich kein Stoppen des Kraftfahrzeugs. Hierbei erlaubt es das Verfahren nicht nur einem Fahrzeugführer des Kraftfahrzeugs, das Kraftfahrzeug in einer gefährlichen Situation anzuhalten, sondern zusätzlich einem Dritten, welcher sich in einer Reichweite des Kraftfahrzeugs befindet. Die externe Not-Stopp-Bedingung des Kraftfahrzeugs kann insbesondere ein durch den fahrzeuginternen Sensor oder Detektor sensierter bzw. detektierter mechanischer Schlag auf/an das Kraftfahrzeug sein. Dieser Schlag kann z. B. mit der menschlichen Hand ausgeführt sein, welcher vom Sensor oder Detektor bevorzugt als ein mechanisches Signal erfasst wird.

Ferner kann die externe Not-Stopp-Bedingung des Kraftfahrzeugs ein durch den Sensor oder Detektor sensierter bzw. detektierter menschlicher Ausruf oder ein tierischer Laut sein. Dies kann z. B. ein laut gerufenes "Stopp" oder "Halt" sowie ein menschlicher oder tierischer Schrei sein. Darüber hinaus kann die Not-Stopp-Bedingung des Kraftfahrzeugs ein sensiertes bzw. detektiertes menschlich erzeugtes Geräusch sein. Dieses Geräusch kann z. B. durch einen Schlag auf/an das Kraftfahrzeug sensiert bzw. detektiert werden. Auch ein Klatschen o. ä. ist anwendbar. Ferner kann die externe Not-Stopp-Bedingung ein durch den Sensor oder Detektor sensierter bzw. detektierter Körperschall sein, der aufgrund eines Auffahrens des Kraftfahrzeugs auf ein externes Hindernis erzeugt wird.

Eine Not-Stopp- oder Not-Aus-Funktion kann für ein Kraftfahrzeug unabhängig von einem Ort eines Signals der externen Not-Stopp-Bedingung, z. B. durch den Schlag auf/an das Kraftfahrzeug, ausgelöst werden. Es brauchen hierfür keine Not-Aus-Knöpfe vorgesehen sein. Die Schall- oder Körperschallwellen des Schlags übertragen sich durch das gesamte Kraftfahrzeug unabgesehen davon, an welchem Ort auf/an Kraftfahrzeugs hingeschlagen wird. Dies gilt analog auch für die anderen externen Not-Stopp-Bedingungen. Ferner ist die Erfindung mit vergleichsweise geringen Zusatzkosten realisierbar. Dies gilt insbesondere dann, wenn im Kraftfahrzeug bereits ein entsprechender Sensor, insbesondere ein Körperschall-Sensor, verbaut ist. In diesem Fall sind die Zusatzkosten marginal.

In Ausführungsformen kann der Sensor oder Detektor zum Sensieren bzw. Detektieren der externen Not-Stopp-Bedingung des Kraftfahrzeugs ein Schallsensor, bevorzugt ein Körperschall-Sensor und insbesondere ein Crash-Sensor, des Kraftfahrzeugs sein. Hierbei kann der Schallsensor, insbesondere der Körperschall-Sensor oder der Crash-Sensor, in mittel- oder unmittelbarem Kontakt mit einer Karosserie oder einem Chassis des Kraftfahrzeugs stehen. In ersterem Fall kann der Körperschall-Sensor oder der Crash-Sensor ein Sensor eines Airbag-Steuergeräts sein bzw. in diesem verbaut sein.

In Ausführungsformen kann eine Vor- oder Einrichtung zur passiven Sicherheit des Kraftfahrzeugs die externe Not-Stopp-Bedingung des Kraftfahrzeugs sensieren bzw. detektieren, wobei diese den Sensor oder Detektor aufweist. Durch eine Vor- oder Einrichtung zur aktiven Sicherheit des Kraftfahrzeugs kann dann das Kraftfahrzeug auf eine Geschwindigkeit, insbesondere eine Längsgeschwindigkeit, von im Wesentlichen Null abgebremst werden. - Bei Vorliegen der externen Not-Stopp-Bedingung kann das Kraftfahrzeug durch eine Betriebsbremse oder eine Feststellbremse des gestoppt werden. - In Ausführungsformen kann eine automatische Einparkfunktion des Kraftfahrzeugs derart eingerichtet sein, dass das Not-Stopp-Verfahren durch die automatische Einparkfunktion durchführbar ist und/oder durchgeführt wird.

Das erfindungsgemäße Computerprogrammprodukt ist mit Programmcodemitteln derart ausgebildet, dass ein erfindungsgemäßes Not-Stopp-Verfahren durchgeführt wird, wenn die Programmcodemittel auf einer Verarbeitungseinrichtung ablaufen oder auf einem computerlesbaren Datenträger gespeichert sind. D. h. das Computerprogrammprodukt, z. B. ein Computerprogramm, umfasst einen Programmcode, die Programmcodemittel, zur Durch- oder Ausführung des Not-Stopp-Verfahrens. Hierbei kann das Computerprogramm auf einem Computer ausgeführt werden oder auf einem Datenträger, wie einem Speicherbaustein oder einer Festplatte, gespeichert sein. Das Computerprogrammprodukt kann dabei beispielsweise Bestandteil der automatischen Einparkfunktion des Kraftfahrzeugs sein.

Die erfindungsgemäße Recheneinheit oder die erfindungsgemäße Verarbeitungseinrichtung, bevorzugt das Steuergerät oder die Steuereinrichtung, ist derart ausgebildet, dass durch die Recheneinheit bzw. die Verarbeitungseinrichtung ein erfindungsgemäßes Not-Stopp-Verfahren durchführbar ist und/oder ein erfindungsgemäßes Computerprogrammprodukt abarbeitbar ist. Die Recheneinheit oder die Verarbeitungseinrichtung ist z. B. als elektronische Recheneinheit, beispielsweise als ein Computer, ausgebildet, welcher natürlich auch noch andere Aufgaben durch- und/oder ausführen kann. - Das erfindungsgemäße Bremssystem für ein Kraftfahrzeug insbesondere mit automatischer Einparkfunktion ist derart eingerichtet, dass es ein erfindungsgemäßes Not-Stopp-Verfahren durchführen kann. Ferner kann das erfindungsgemäße Bremssystem zusätzlich oder alternativ ein erfindungsgemäßes Computerprogrammprodukt und/oder eine erfindungsgemäße Recheneinheit oder Verarbeitungseinrichtung aufweisen.

### Ausführungsformen der Erfindung

Die Erfindung ist im Folgenden anhand einer Mehrzahl von Ausführungsformen näher erläutert. Die Erfindung ist jedoch nicht auf solche Ausführungsformen beschränkt, sondern umfasst eine Vielzahl von Ausführungsformen, wobei es erfindungsgemäß möglich sein soll, ein Kraftfahrzeug ohne eine externe technische, d. h. fahrzeugexterne, Ein-/Vorrichtung bei vergleichsweise langsamer Fahrt durch einen bezüglich des Kraftfahrzeugs externen Verkehrsteilnehmer zu einer Bremsung bis zum Stillstand des Kraftfahrzeugs, insbesondere einer Notbremsung, zu zwingen. D. h. gemäß der Erfindung stellt das Kraftfahrzeug alleine die hierfür notwendigen technischen Mittel zur Verfügung.

Die vergleichsweise langsame Fahrt des Kraftfahrzeugs entspricht einer Geschwindigkeit, insbesondere einer Längsgeschwindigkeit, des Kraftfahrzeugs von bevorzugt 0,2-12 km/h, insbesondere von 0,75-1,75; 2,25-3,25; 3,75-4,25; 4,75-5,25; 5,75-6,25; 6,75-7,25 und 7,75-8,5; km/h ± 0,25 km/h. Geschwindigkeiten, insbesondere Längsgeschwindigkeiten, von mehr als 12 oder 15 km/h und insbesondere von weniger als 0,2 km/h sind anwendbar. Die Angaben zu den Geschwindigkeiten sind Beträge, das Kraftfahrzeug kann also vor- oder rückwärts mit einer solchen Geschwindigkeit fahren. - Wenn im Folgenden von einem ,Sensor' bzw. 'sensieren' die Rede ist, so sollen auch die Begriffe ,Detektor' bzw. ,detektieren' darunter fallen.

Ein Mangel an einer Funktion automatisches Einparken oder Valet-Parking eines Kraftfahrzeugs ist, dass ein Fahrzeugführer keine Rundumsicht um sein Kraftfahrzeug beim Einparken besitzt, weil er nicht im Kraftfahrzeug sitzt. Er steht außerhalb seines Kraftfahrzeugs und kontrolliert das automatisches Einparken z. B. mit Hilfe seines Smartphones oder Fahrzeugschlüssels. Ergibt sich eine gefährliche Situation auf einer dem Fahrzeugführer abgewandten Seite des Kraftfahrzeugs, so kann diese von ihm nur schlecht eingesehen werden; z. B. ein Kind befindet sich auf der abgewandten Seite, ein vorbeigehender Fußgänger übersieht das einparkende Kraftfahrzeug etc. Da außer dem Fahrzeugführer keiner das Kraftfahrzeug anhalten kann, kann dies schwerwiegende Konsequenten für Dritte haben.

Gemäß der Erfindung ist ein Verfahren für einen externen Not-Stopp bzw. ein externes Not-Aus des Kraftfahrzeugs bereitgestellt, welches es nicht nur dem Fahrzeugführer erlaubt, das Kraftfahrzeug in einer gefährlichen Situation anzuhalten, sondern zusätzlich jedem beliebigen Dritten, der sich in Reichweite des Kraftfahrzeugs befindet. - Eine Ausführungsform der Erfindung besteht darin, dass durch einen physischen bzw. mechanischen Schlag auf das Kraftfahrzeug, dieses vergleichsweise schnell zum Stehen gebracht wird. Dies ist eine zusätzliche Not-Stopp-Funktion zu der des Fahrzeugführers und kann von jedem beliebigen Dritten, z. B. einem Fußgänger, Fahrradfahrer, Kind etc. ausgelöst werden.

Die Erfindung nutzt einen Reflex des Menschen auf dasjenige Objekt zu schlagen bzw. es wegdrücken zu wollen, wenn es einem betreffenden Individuum zu nahe kommt, was natürlich nur auf entsprechend große Objekte, wie Kraftfahrzeuge zutrifft. - Bei jedem Kontakt zweier Körper werden Schallwellen übertragen, wobei je "härter" der Kontakt, also je höher ein Impulsübertrag zwischen diesen Körpern ist, desto mehr Energie wird übertragen und desto aufgeprägter sind die erzeugten und auswertbaren Schallwellen. Das ElastizitätsModul (E-Modul) des- oder derjenigen Elemente, in welchem bzw. welchen die Körperschallwellen übertragen werden, spielt eine maßgebliche Rolle. Ein Material mit hohem E-Modul, also ein vergleichsweise ,hartes' Material, überträgt Schallwellen besser, d. h. mit geringerer Dämpfung.

Eine Karosserie und/oder ein Chassis des Kraftfahrzeugs können als solche Elemente für die Übertragung von Körperschall sehr gut genutzt werden, d. h. durch diese Elemente werden Körperschalwellen vergleichsweise sehr gut übertragen. - In einer bevorzugten Ausführungsform der Erfindung wird der Schlag daher durch einen Körperschall-Sensor sensiert. Körperschall-Sensoren werden u. a. für eine Crash-Sensierung angewendet. In der Regel ist ein solcher Sensor in einem Airbag-Steuergerät integriert, welches zentral im Kraftfahrzeug, meist auf bzw. in einem Tunnel im Bereich einer Feststellbremse des Kraftfahrzeugs verbaut ist. Das Airbag-Steuergerät selbst ist bevorzugt mechanisch starr mit dem Chassis und somit auch der Karosserie verbunden, wodurch vom Chassis und/oder von der Karosserie kommende Körperschallwellen vom Crash-Sensor gut detektiert werden können.

Andere Körperschall-Sensoren, insbesondere Körperschall-Sensoren, welche direkt an der Karosserie und/oder dem Chassis verbaut sind, sind natürlich anwendbar. Der Vorteil der Messmethode von Körperschall gegenüber einer Sensierung von herkömmlichen Schallwellen in Luft (Ausführungsformen siehe unten) ist derjenige, dass die Schallwellen vom Körperschall-Sensor sehr früh sensiert werden können, da die Schallgeschwindigkeit in den beteiligten Materialien (> 5.000 bis > 6.000 m/s) vergleichsweise hoch ist und die Schallwellen somit vergleichsweise schnell durch die Karosserie und/oder das Chassis propagieren. (Im Vergleich dazu die Schallgeschwindigkeit in Luft: 320-355 m/s je nach einer Temperatur und einem Druck.)

Die Frequenzen und vor Allem die Amplituden der durch den betreffenden Körperschall-Sensor zu sensierenden Schallwellen, welche bei einem Crash entstehen sind im Vergleich zu denen, die für diese Erfindung relevant sind - ein Schlag oder Parkrempler (siehe unten) - deutlich größer. Ein vergleichsweise einfacher Schwellwert kann mit Sicherheit unterscheiden, ob es sich um einen leichten Crash ohne eine Auslösung eines Airbags, einen schweren Crash mit Airbagauslösung oder um einen Not-Aus-Schlag bzw. einen Parkrempler handelt, bei dem nur das Kraftfahrzeug gebremst werden soll.

Ein zusätzliches oder alternatives Kriterium kann die gefahrene Geschwindigkeit sein. Bei den oben genannten Geschwindigkeiten und Geschwindigkeiten bis ca. max. 20 km/h kann es sich um einen Not-Stopp des Kraftfahrzeugs im Sinne der Erfindung handeln. Bei Geschwindigkeiten von mehr als 25-30 km/h wird es sich eher nicht um einen Not-Aus-Schlag durch einen Fußgänger handeln, sondern um einen Crash des Kraftfahrzeugs. - Registriert der Körperschall- bzw. Crash-Sensor ein entsprechendes Signal, eine so genannte externe Not-Stopp-Bedingung des Kraftfahrzeugs, so wird das Kraftfahrzeug bei Vorliegen der Not-Stopp-Bedingung im Wesentlichen unverzüglich gestoppt, d. h. bis zum Stillstand abgebremst.

Da es heutzutage Stand der Technik ist, die aktive und die passive Sicherheit eines Kraftfahrzeugs miteinander zu kombinieren, so stellt es kein Problem dar, einen Not-Aus-Schlag, also die externe Not-Stopp-Bedingung des Kraftfahrzeugs, mit der passiven Sicherheit (Airbag-Steuergerät) des Kraftfahrzeugs zu erfassen und dann über die aktive Sicherheit eine Bremsung einzuleiten. Die Bremsung kann sowohl durch die Betriebsbremse als auch durch die Feststellbremse durchgeführt werden, da die gefahrenen Geschwindigkeiten des Kraftfahrzeugs vergleichsweise gering sind. Ist ein entsprechender Sensor verbaut, so kann die Erfindung rein softwaretechnisch, also durch ein Computerprogrammprodukt, umgesetzt werden.

Ein weiterer Vorteil der Erfindung ist, dass im Fall z. B. eines Einzelfehlers eines Abstandssensors beim Einparken, durch die Erfindung auch der Parkrempler erkannt werden kann und das Kraftfahrzeug durch das Sensieren der Not-Stopp-Bedingung aufgrund des Parkremplers gestoppt wird. D. h. ein durch den fahrzeuginternen Sensor sensierter Körperschall ist derjenige der aufgrund eines Auffahrens des Kraftfahrzeugs auf ein externes Hindernis erzeugt wird. Ferner ist es möglich, eine Empfindlichkeit der beteiligten Komponenten, also eines Not-Aus-Systems, zu erhöhen, wenn der Abstand, z. B. beim Parken, zu einem Objekt reduziert wird und/oder das Kraftfahrzeug langsam fährt (siehe oben). Hierdurch kann eine Sensiergenauigkeit verbessert und/oder Parkrempler besser detektiert werden, wobei gemäß der Erfindung auch sehr schwache Parkrempler detektiert werden können.

Andere Ausführungsform der Erfindung bestehen z. B. darin, durch einen entsprechenden fahrzeuginternen Sensor einen menschlichen Ausruf, ein menschlich erzeugtes Geräusch oder einen tierischen Laut zu sensieren. Demensprechend ist der an einer geeigneten Stelle verbaute Sensor ein Stimm- bzw. Lautsensor, der Schallwellen in Luft detektieren kann. Anhand der durch diesen Akustik-Sensor erfassten Schall-Frequenz kann eine Verarbeitungseinrichtung, z. B. eine elektronische Recheneinheit, bestimmen, ob es sich um ein für die Ausgabe der Not-Stopp-Bedingung relevantes Signal handelt oder nicht.

Eine geeignete Stelle für einen solchen Sensor ist z. B. an einem unteren, oberen und/oder seitlichen Rand einer Front- oder Heckscheibe des Kraftfahrzeugs. Auch frontseitig, heckseitig und/oder seitlich am Kraftfahrzeug kann solch ein Akustik-Sensor vorgesehen sein. Ein Akustik-Sensor eignet sich ferner auch, um die durch einen Schlag auf/an das Kraftfahrzeug erzeugten Schallwellen zu sensieren. Darüber hinaus kann durch den Akustik-Sensor der Parkrempler akustisch sensiert werden.

Gemäß der Erfindung wird vom entsprechenden Sensor - dem Körperschall-, dem Crash- oder dem Akustik-Sensor - ein Signal aufgenommen, das von der Verarbeitungseinrichtung, z. B. der elektronischen Recheneinheit, oder ggf. dem Sensor selbst aufbereitet wird. Die Verarbeitungseinrichtung analysiert dann das Signal auf Vorliegen einer externen Not-Stopp-Bedingung. Dies erfolgt aufgrund charakteristischer Frequenzen und Amplituden, ggf. unter Berücksichtigung der gefahrenen Geschwindigkeit des Kraftfahrzeugs (siehe oben). Bei Vorliegen der externen Not-Stopp-Bedingung wird das Kraftfahrzeug gestoppt; wenn nicht, dann natürlich nicht und das Signal wird ggf. auf Vorliegen weiterer Charakteristika analysiert.

Die Verarbeitungseinrichtung bzw. die elektronische Recheneinheit kann ein Steuergerät oder eine Steuereinrichtung für des Kraftfahrzeugs sein. Ferner ist es natürlich möglich, einen integrierten Schaltkreis, wie z. B. einen ASIC (Application Specific Integrated Circuit), einen Mikrocontroller, einen DSP (Digital Signal Processor) etc., ggf. benachbart oder direkt benachbart, beim Sensor vorzusehen, welcher ein Sensorsignal entsprechend aufbereiten kann. Bevorzugt entscheidet jedoch die Verarbeitungseinrichtung, ob die externe Not-Stopp-Bedingung vorliegt oder nicht.

## Patentansprüche

1. Verfahren zum externen Not-Stoppen eines Kraftfahrzeugs bei vergleichsweise langsamer Fahrt durch einen bezüglich des Kraftfahrzeugs externen Verkehrsteilnehmer, **dadurch gekennzeichnet, dass**
durch einen fahrzeuginternen Sensor des Kraftfahrzeugs eine durch den externen Verkehrsteilnehmer ausgelöste Not-Stopp-Bedingung des Kraftfahrzeugs sensiert werden kann, und das Kraftfahrzeug bei Vorliegen der externen Not-Stopp-Bedingung gestoppt wird, wobei das Verfahren es nicht nur einem Fahrzeugführer des Kraftfahrzeugs erlaubt, das Kraftfahrzeug in einer gefährlichen Situation anzuhalten, sondern einem externen Verkehrsteilnehmer, welcher sich in einer Reichweite des Kraftfahrzeugs befindet, wobei
die externe Not-Stopp-Bedingung des Kraftfahrzeugs:
• ein durch den fahrzeuginternen Sensor sensierter mechanischer Schlag auf/an das Kraftfahrzeug ist und/oder;
• ein durch den fahrzeuginternen Sensor sensierter menschlicher Ausruf oder tierischer Laut ist und/oder;
• ein durch den fahrzeuginternen Sensor sensiertes menschlich erzeugtes Geräusch ist; und/oder
• ein durch den fahrzeuginternen Sensor sensierter Körperschall ist, der aufgrund eines Auffahrens des Kraftfahrzeugs auf ein externes Hindernis erzeugt wird.

2. Externes Not-Stopp-Verfahren gemäß einem der vorhergehenden Ansprüche, **dadurch gekennzeichnet, dass** der Sensor zum Sensieren der externen Not-Stopp-Bedingung des Kraftfahrzeugs ein Schallsensor, bevorzugt ein Körperschall-Sensor und insbesondere ein Crash-Sensor, des Kraftfahrzeugs ist.

3. Externes Not-Stopp-Verfahren gemäß einem der vorhergehenden Ansprüche, **dadurch gekennzeichnet, dass** durch eine Vor- oder Einrichtung zur passiven Sicherheit des Kraftfahrzeugs die externe Not-Stopp-Bedingung des Kraftfahrzeugs sensiert wird, und das Kraftfahrzeug durch eine Vor- oder Einrichtung zur aktiven Sicherheit des Kraftfahrzeugs auf eine Geschwindigkeit, insbesondere eine Längsgeschwindigkeit, von im Wesentlichen Null abgebremst wird.

4. Externes Not-Stopp-Verfahren gemäß einem der vorhergehenden Ansprüche, **dadurch gekennzeichnet, dass** das Kraftfahrzeug bei Vorliegen der externen Not-Stopp-Bedingung durch eine Betriebsbremse oder eine Feststellbremse des Kraftfahrzeugs gestoppt wird.

5. Externes Not-Stopp-Verfahren gemäß einem der vorhergehenden Ansprüche, **dadurch gekennzeichnet, dass** eine automatische Einparkfunktion des Kraftfahrzeugs derart eingerichtet ist, dass das Not-Stopp-Verfahren von der automatischen Einparkfunktion durchführbar ist und/oder durchgeführt wird.

6. Externes Not-Stopp-Verfahren gemäß einem der vorhergehenden Ansprüche, **dadurch gekennzeichnet, dass**:
• die vergleichsweise langsame Fahrt der Längsgeschwindigkeit des Fahrzeugs von 0,2-10 km/h, insbesondere 1,0-2,0; 2,5-3,5; 4,0-4,5; 5,0-5,5; 6,0-6,5; 7,0-7,5 und 8,0-9,0 km/h ± 0,25 km/h entspricht; und/ oder
• das Kraftfahrzeug bei Vorliegen der externen Not-Stopp-Bedingung im Wesentlichen unverzüglich gestoppt, insbesondere abgebremst, wird.

7. Computerprogrammprodukt mit Programmcodemitteln, die ausgebildet sind ein Not-Stopp-Verfahren nach einem der Ansprüche 1 bis 6 durchzuführen, wenn die Programmcodemittel auf einer Verarbeitungseinrichtung ablaufen oder auf einem computerlesbaren Datenträger gespeichert sind.

8. Recheneinheit oder Verarbeitungseinrichtung, bevorzugt Steuergerät oder Steuereinrichtung für ein Kraftfahrzeug welche derart ausgebildet ist, dass durch die Recheneinheit bzw. Verarbeitungseinrichtung ein externes Not-Stopp-Verfahren nach einem der Ansprüche 1 bis 6 durchführbar und/oder ein Computerprogrammprodukt nach Anspruch 7 ablaufbar ist.

9. Bremssystem für ein Kraftfahrzeug mit automatischer Einparkfunktion, **dadurch gekennzeichnet, dass** das Bremssystem derart eingerichtet ist, dass durch das Bremssystem ein externes Not-Stopp-Verfahren nach einem der Ansprüche 1 bis 6 durchführbar ist, das Bremssystem ein Computerprogrammprodukt nach Anspruch 7, und/oder eine Recheneinheit oder eine Verarbeitungseinrichtung nach Anspruch 8 aufweist.

## Claims

1. Method for the performance of an external emergency stop of a comparatively slow moving motor vehicle by a road user who is external with respect to the motor vehicle, **characterized in that**
an emergency stop condition of the motor vehicle which is triggered by the external road user can be sensed by a vehicle-internal sensor of the motor vehicle, and when the external emergency stop condition is met the motor vehicle is stopped, wherein the method permits not only a vehicle driver of the motor vehicle, but also an external road user who is within range of the motor vehicle, to stop the motor vehicle in a hazardous situation, wherein
the external emergency stop condition of the motor vehicle:
• is a mechanical impact on/against the motor vehicle which is sensed by the vehicle-internal sensor, and/or;
• is a human cry or animal call which is sensed by the vehicle-internal sensor, and/or;
• is a noise which is generated by a human and is sensed by the vehicle-internal sensor; and/or
• is a solid-borne sound which is sensed by the vehicle-internal sensor and which is generated owing to the motor vehicle running into an external obstacle.

2. External emergency stop method according to one of the preceding claims, **characterized in that** the sensor for sensing the external emergency stop condition of the motor vehicle is a sound sensor, preferably a solid-borne sound sensor and, in particular, a crash sensor, of the motor vehicle.

3. External emergency stop method according to one of the preceding claims, **characterized in that** the external emergency stop condition of the motor vehicle is sensed by means of a passive safety device or apparatus of the motor vehicle, and the motor vehicle is braked to a speed, in particular a longitudinal speed, of essentially zero, by an active safety device or apparatus of the motor vehicle.

4. External emergency stop method according to one of the preceding claims, **characterized in that** when the external emergency stop condition is met the motor vehicle is stopped by means of a service brake or a parking brake of the motor vehicle.

5. External emergency stop method according to one of the preceding claims, **characterized in that** an automatic parking function of the motor vehicle is configured in such a way that the emergency stop method can be and/or is carried out by the automatic parking function.

6. External emergency stop method according to one of the preceding claims, **characterized in that**:
• the comparatively slow travel corresponds to the longitudinal speed of the vehicle of 0.2-10 km/h, in particular 1.0-2.0; 2.5-3.5; 4.0-4.5; 5.0-5.5; 6.0-6.5; 7.0-7.5 and 8.0-9.0 km/h ± 0.25 km/h; and/or
• when the external emergency stop condition is met the motor vehicle is stopped, in particular braked, essentially without delay.

7. Computer program product with program code means which are designed to carry out an emergency stop method according to one of Claims 1 to 6, when the program code means are run on a processing apparatus or stored on a computer-readable data carrier.

8. Computing unit or processing apparatus, preferably control unit or control apparatus for a motor vehicle which is designed in such a way that an external emergency stop method according to one of Claims 1 to 6 can be carried out by means of the computing unit or processing apparatus and/or a computer program product according to Claim 7 can be run.

9. Brake system for a motor vehicle having an automatic parking function, **characterized in that** the brake system is configured in such a way that by means of the brake system an external emergency stop method according to one of Claims 1 to 6 can be carried out, and the brake system has a computer program product according to Claim 7 and/or a computing unit or a processing apparatus according to Claim 8.

## Revendications

1. Procédé d'arrêt d'urgence externe d'un véhicule automobile lors d'un déplacement relativement lent par un usager de la route externe par rapport au véhicule automobile, **caractérisé en ce que**
une condition d'arrêt d'urgence du véhicule automobile, déclenchée par l'usage de la route externe, peut être détectée par un capteur interne au véhicule du véhicule automobile et le véhicule automobile est arrêté en présence de la condition d'arrêt d'urgence externe, le procédé permettant non seulement à un conducteur du véhicule automobile d'arrêter le véhicule automobile dans une situation dangereuse, mais aussi à un usager de la route externe qui se trouve à portée du véhicule automobile,
la condition d'arrêt d'urgence externe du véhicule automobile :
* étant un choc mécanique sur/contre le véhicule automobile détecté par le capteur interne au véhicule et/ou ;
* étant un appel humain ou un cri animal détecté par le capteur interne au véhicule et/ou ;
* étant un bruit d'origine humaine détecté par le capteur interne au véhicule et/ou ;
* étant un bruit de structure détecté par le capteur interne au véhicule, lequel est produit en raison d'un roulage du véhicule automobile sur un obstacle externe.

2. Procédé d'arrêt d'urgence externe selon l'une des revendications précédentes, **caractérisé en ce que** le capteur destiné à détecter la condition d'arrêt d'urgence externe du véhicule automobile est un capteur acoustique, de préférence un capteur de bruits de structure et notamment un capteur de collision du véhicule automobile.

3. Procédé d'arrêt d'urgence externe selon l'une des revendications précédentes, **caractérisé en ce que** la condition d'arrêt d'urgence externe du véhicule automobile est détectée par un arrangement ou un dispositif de sécurité passive du véhicule automobile, et le véhicule automobile est freiné par un arrangement ou un dispositif de sécurité active du véhicule automobile à une vitesse, notamment une vitesse longitudinale, sensiblement égale à zéro.

4. Procédé d'arrêt d'urgence externe selon l'une des revendications précédentes, **caractérisé en ce que** le véhicule automobile, en présence de la condition d'arrêt d'urgence externe, est arrêté par un frein de service ou un frein d'immobilisation du véhicule automobile.

5. Procédé d'arrêt d'urgence externe selon l'une des revendications précédentes, **caractérisé en ce qu'**une fonction d'entrée en stationnement automatique du véhicule automobile est conçue de telle sorte que le procédé d'arrêt d'urgence peut être mis en oeuvre et/ou est mis en oeuvre par la fonction d'entrée en stationnement automatique.

6. Procédé d'arrêt d'urgence externe selon l'une des revendications précédentes, **caractérisé en ce que** :
* le déplacement relativement lent correspond à la vitesse longitudinale du véhicule de 0,2 à 10 km/h, notamment de 1,0 à 2,0 ; 2,5 à 3,5 ; 4,0 à 4,5 ; 5,0 à 5,5 ; 6,0 à 6,5 ; 7,0 à 7,5 et 8,0 à 9,0 km/h ±0,25 km/h ; et/ou
* en présence de la condition d'arrêt d'urgence externe, le véhicule automobile et arrêté, notamment freiné, sensiblement immédiatement.

7. Produit de programme informatique comprenant des moyens de code de programme qui sont configurés pour mettre en oeuvre un procédé d'arrêt d'urgence selon l'une des revendications 1 à 6 lorsque les moyens de code de programme sont exécutés sur un dispositif de traitement ou sont enregistrés sur un support de données lisible par ordinateur.

8. Unité de calcul ou dispositif de traitement, de préférence contrôleur ou dispositif de commande pour un véhicule automobile qui est configuré de telle sorte que l'unité de calcul ou le dispositif de traitement peut mettre en oeuvre un procédé d'arrêt d'urgence selon l'une des revendications 1 à 6 et/ou peut exécuter un produit de programme informatique selon la revendication 7.

9. Système de freinage pour un véhicule automobile doté d'une fonction d'entrée en stationnement automatique, **caractérisé en ce que** le système de freinage est configuré de telle sorte que le système de freinage peut mettre en oeuvre un procédé d'arrêt d'urgence selon l'une des revendications 1 à 6, le système de freinage possédant un produit de programme informatique selon la revendication 7 et/ou une unité de calcul ou un dispositif de traitement selon la revendication 8.
